(19) Europäisches Patentamt
European Patent Office
Office européen des brevets

(11) Veröffentlichungsnummer: **0 299 191 B1**

(12) **EUROPÄISCHE PATENTSCHRIFT**

(45) Veröffentlichungstag der Patentschrift: **04.03.92**

(21) Anmeldenummer: **88108886.8**

(22) Anmeldetag: **03.06.88**

(51) Int. Cl.⁵: **A01N 47/24**, A01N 47/20, A01N 47/18, A01N 47/12, B27K 3/50, //(A01N47/24,43:40, 33:12),(A01N47/20,43:40,33:12), (A01N47/18,43:40,33:12), (A01N47/12,43:40,33:12)

# (54) Fungizide Wirkstoffgemische.

(30) Priorität: **09.06.87 DE 3719194**

(43) Veröffentlichungstag der Anmeldung: **18.01.89 Patentblatt 89/03**

(45) Bekanntmachung des Hinweises auf die Patenterteilung: **04.03.92 Patentblatt 92/10**

(84) Benannte Vertragsstaaten: **AT BE CH DE ES FR GB GR IT LI LU NL SE**

(56) Entgegenhaltungen:
**EP-A- 0 093 962**
**EP-A- 0 093 963**
**EP-A- 0 189 844**

**KIRK-OTHMER, Encyclopedia of Chemical Technology, Band 19, 3. Auflage, 1982, Seite 530, J. Wiley & Sons, New York, US**

(73) Patentinhaber: **Henkel Kommanditgesellschaft auf Aktien**
**Postfach 1100 Henkelstrasse 67**
**W-4000 Düsseldorf 1(DE)**

(72) Erfinder: **Lehmann, Rudolf, Dr.**
**Schnugsheide 2**
**W-5653 Leichlingen(DE)**
Erfinder: **Leinen, Hans Theo, Dr.**
**Gertrudistrasse 2**
**W-4000 Düsseldorf(DE)**
Erfinder: **Orth, Reinhard, Dr.**
**Marie Curie-Strasse 1**
**W-4019 Monheim(DE)**
Erfinder: **Müller, Hans-Jürgen, Dr.**
**Bahlenstrasse 99**
**W-4000 Düsseldorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft fungizide Wirkstoffgemische, insbesondere antimikrobiell wirksame Gemische mit einem Gehalt an quaternären Ammoniumverbindungen und Jodpropinyloxy-ethanol-carbamatverbindungen.

Die Verwendung von quartären Ammoniumhalogeniden als Wirkstoffe in antimikrobiellen Mitteln ist seit langem bekannt, siehe beispielsweise K. Lindner, Tenside-Textilhilfsmittel-Waschrohstoffe, 2. Auflage, Band 1, Wissenschaftliche Verlagsgesellschaft mbH, Stuttgart 1964, Seite 984 und Kirk-Othmer, Encyclopedia of Chemical Technology, Third Editon, Volume 19, John Wiley & Sons, New York, Chichester; Brisbane, Toronto, Singapore 1982, Seite 530. Auch die Verwendung von Jodpropinyloxy-ethanol-carbamaten als Bakterizide und Fungizide ist seit längerer Zeit bekannt, siehe beispielsweise DE 32 16 895 A1.

Auf dem Gebiet der Desinfektions- und Konservierungsmittel besteht unter den Gesichtspunkten des Umweltschutzes und der Wirtschaftlichkeit ein Bedürfnis nach Wirkstoffen und Wirkstoffkombinationen, die schon bei geringen Anwendungskonzentrationen eine hinreichende antimikrobielle Wirkung zeigen. In diesem Zusammenhang sind nicht nur neue Verbindungen von Interesse, sondern auch synergistisch wirkende Kombinationen bereits bekannter Wirkstoffe.

Es wurde gefunden, daß Kombinationen aus quartären Ammoniumhalogeniden vom Benzalkontyp und Jodpropinyloxy-ethanol-carbamaten eine synergistische antimikrobielle Wirkung zeigen, wenn die beiden Komponenten in einem bestimmten Gewichtsverhältnis zueinander vorliegen.

Gegenstand der Erfindung sind antimikrobiell wirksame Gemische enthaltend

a) mindestens eine antimikrobiell wirksame quartäre Ammoniumverbindung und

b) mindestens eine antimikrobiell wirksame Jodpropinyloxy-ethanol-carbamatverbindung,

wobei die Komponenten a und b im Gewichtsverhältnis von a : b im Bereich von 0,3 : 1 bis 9 : 1 vorliegen.

Dabei kommen als antimikrobiell wirksame quartäre Ammoniumverbindungen insbesondere Substanzen des Benzalkontyps in Betracht, die der Formel I

$$[R^1R^2\overset{+}{N}(CH_3)_2]X^{\ominus} \qquad (I)$$

entsprechen, in der $R^1$ und $R^2$ gleich oder verschieden sein können und einen vorzugsweise geradkettigen Alkylrest mit 8 bis 18 Kohlenstoffatomen oder einen Benzylrest und $X^{\ominus}$ ein Halogenidanion, insbesondere ein Chloridanion darstellen, wobei nur einer der Reste $R^1$ oder $R^2$ ein Benzylrest sein kann. Diese quartären Ammoniumverbindungen können in den erfindungsgemäßen Gemischen als chemische Individuen oder als Gemische enthalten sein. Beispiele für derartige antimikrobiell wirksame quartäre Ammoniumverbindungen sind Benzyl-dimethyl-n-decylammoniumchlorid, Benzyl-dimethyl-n-dodecylammoniumchlorid, Benzyldimethyl-n-tetradecylammoniumchlorid, Benzyl-dimethyl-n-octadecylammoniumchlorid und Benzyl-dimethyl-kokosalkylammoniumchlorid, in dem der Rest R aus der Formel I von dem hydrierten Fettsäuregemisch des Kokosöls abgeleitet ist sowie Dioctyldimethyl-dimethylammoniumchlorid und Dodecyldimethylammoniumchlorid. Benzyl-dimethyl-n-dodecylammoniumchlorid und Benzyl-dimethyl-n-tetradecylammoniumchlorid sowie Gemische dieser Verbindungen können dabei eine bevorzugte Stellung einnehmen.

Als antimikrobiell wirksame Jodpropinyloxy-ethanol-carbamatverbindungen eignen sich insbesondere 2-(3-Iod-2-propinyloxy)-ethanol-carbamate der allgemeinen Formel (II)

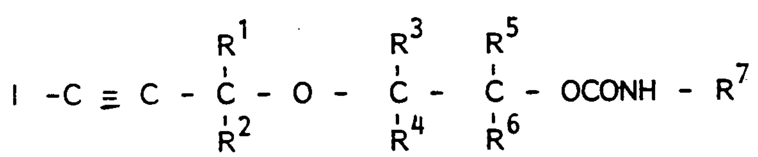

(II)

in der $R^1$ und $R^2$ gleich oder verschieden sind und Wasserstoff, lineare oder verzweigte Alkyl- oder Alkenylreste mit 1 bis 6 Kohlenstoffatomen oder cyclische Alkylreste mit 5 bis 7 Kohlenstoffatomen oder $R^1$ und $R^2$ zusammengenommen $-(CH_2)_n$-bedeuten,, wobei n 4 bis 6 ist, $R^3$, $R^4$, $R^5$ und $R^6$, die gleich oder verschieden sein können, Wasserstoff, Alkylreste mit 1 bis 4 Kohlenstoffatomen, Arylreste oder $CCl_3$ bedeuten oder $R^3$ und $R^5$ oder $R^4$ und $R^6$ zusammengenommen $-(CH_2)_n$ bedeuten, wobei n 3 bis 5 ist, und $R^7$ Wasserstoff, lineare oder verzweigte Alkylreste mit 1 bis 12 Kohlenstoffatomen oder cyclische Alkylreste mit 4 bis 8 Kohlenstoffatomen, Arylreste, substituierte Arylreste, Aralkylreste oder Arylsulfonylreste bedeutet.

Beispiele für lineare oder verzweigte Alkylreste oder Alkenylreste mit 1 bis 6 Kohlenstoffatomen, für die $R^1$ und $R^2$ stehen, sind Methyl, Ethyl, Propyl, Isopropyl, n-Butyl, Isobutyl, sec.-Butyl, tert.-Butyl, Pentyl, Hexyl und deren verzweigte Isomere, Vinyl, Allyl, Propenyl, Butenyl, Pentenyl und Hexenyl sowie die

entsprechenden Isomeren der genannten Alkenyle mit 4, 5 und 6 Kohlenstoffatomen. Beispiele für cyclische Alkylreste mit 5 bis 7 Kohlenstoffatomen, für die $R^1$ und $R^2$ stehen, sind Cyclopentan, Cyclohexan und Cycloheptan. Bevorzugt werden Verbindungen der Formel (II) in denen beide Substituenten $R^1$ und $R^2$ gleichzeitig Wasserstoff oder gleichzeitig Methyl sind, sowie solche, in denen von $R^1$ und $R^2$ ein Substituent Wasserstoff ist, während der andere Methyl darstellt.

Beispiele für Alkylreste mit 1 bis 4 Kohlenstoffatomen, für die $R^3$, $R^4$, $R^5$ und $R^6$ stehen, sind Methyl, Ethyl, Propyl, Isopropyl, n-Butyl, Isobutyl, sec.-Butyl und tert.-Butyl,wobei Methyl bevorzugt wird.

Beispiele für Arylreste, für die $R^3$, $R^4$, $R^5$ und $R^6$ stehen, sind Phenyl und Naphthyl.

Bevorzugt sind Verbindungen der allgemeinen Formel (II), in denen von den Resten $R^1$ bis $R^6$ mindestens 4 Reste Wasserstoff bedeuten.

Beispiele für lineare und verzweigte Alkylreste mit 1 bis 12 Kohlenstoffatomen, für die $R^7$ steht, sind Methyl, Ethyl, Propyl, Isopropyl, n-Butyl, Isobutyl, sec.-Butyl, tert.-Butyl, Pentyl, Hexyl, Heptyl, Octyl, Nonyl, Decyl, Undecyl, Dodecyl sowie die verzweigten Isomeren der Alkyle mit 5 bis 12 Kohlenstoffatomen.

Beispiele für cyclische Alkylreste mit 4 bis 8 Kohlenstoffatomen, für die $R^7$ steht, sind Cyclobutyl, Cyclopentyl, Cyclohexyl, Cycloheptyl und Cyclooctyl.

Beispiele für Aryl und substituiertes Aryl, für die $R^7$ steht, sind Phenyl, Naphthyl, Tolyl, Chlorphenyl, Bromphenyl, Fluorphenyl, Dichlorphenyl und Trichlorphenyl.

Beispiele für Aralkyl und Arylsulfonyl, für die $R^7$ steht, sind Benzyl und p-Toluolsulfonyl.

Bevorzugt werden Verbindungen, in denen $R^7$ ein niederer Alkylrest mit 1 bis 4 Kohlenstoffatomen, sowie ein Arylrest oder mit Chlor oder Brom substituierter Arylrest ist.

Beispiele für besonders bevorzugte Verbindungen sind solche, in denen $R^7$ Propyl, Butyl oder Phenyl ist.

Die N-substituierten 2-(3-Iod-2-propinyloxy)-ethanol-carbamate der allgemeinen Formel (II) werden nach an sich bekannten Verfahren (Houben-Weyl, Methoden der Org. Chemie, Bd. 8, S. 141 - 144 (1952)) durch Umsetzung äquimolarer Mengen der Alkohole mit geeigneten, z.B. im Handel erhältlichen Isocyanaten synthetisiert, wie beispielsweise in der DE 32 16 894 A1 und in der DE 32 16 895 A1 beschrieben ist.

Bei der Bestimmung der mikrobistatischen Wirkung an verschiedenen Pilzkulturen konnten mit solchen Gemischen deutlich synergistische Wirkungen beobachtet werden.

Gemäß einer bevorzugten Ausführungsform der vorliegenden Erfindung wird das Gewichtsverhältnis der Komponenten a und b im Gewichtsverhältnis von a : b im Bereich von 1 : 1 bis 6 : 1 eingestellt.

Zur Herstellung gebrauchsfertiger antimikrobieller Mittel können die erfindungsgemäßen antimikrobiell wirksamen Gemische in Form von wasserhaltigen Konzentraten bereitgestellt werden, in denen die Gesamtkonzentration der Komponenten a und b zwischen 3 und 50 Gew.-% ausmachen kann. In den wasserhaltigen gebrauchsfertigen antimikrobiellen Mitteln, wie sie für Desinfektions- und Konservierungszwecke eingesetzt werden, liegt die Gesamtkonzentration der Komponenten a und b im allgemeinen zwischen 0,005 und 5 Gew.-%, bezogen auf das gesamte Mittel.

Die gebrauchsfertigen antimikrobiell wirksamen Gemische bestehen im einfachsten Fall aus einer wäßrigen Lösung, in der die quartäre Ammoniumverbindung und die Jodpropinyloxy-ethanol-carbamatverbindung im angegebenen Verhältnis und in der angegebenen Konzentration gelöst sind. In der Mehrzahl der Fälle enthalten die für die praktische Anwendung bestimmten Gemische weitere üblicherweise verwendete Bestandteile, die je nach der vorgesehenen Anwendungsform und dem Anwendungszweck ausgewählt werden. Für flüssige Zubereitungen kommen als Lösungsmittel neben Wasser auch Gemische aus Wasser und wassermischbaren organischen Lösungsmitteln in Betracht, beispielsweise Ethanol, Isopropanol, Ethylenglykol, Propylenglykol, Ethylethylenglykol und Propylpropylenglykol. Solche Lösungen lassen sich gut versprühen, wobei man entweder Druckluft anwendet oder ein in der Aerosoltechnik für die Herstellung von Sprays gebräuchliches Treibmittel einsetzt.

Wenn neben der antimikrobiellen Wirkung eine zusätzliche Reinigungswirkung erwünscht ist, können die erfindungsgemäßen Gemische Tenside, insbesondere nichtionische Tenside enthalten. Beispiele für geeignete Tenside sind Anlagerungsprodukte von 4 bis 40, vorzugsweise 4 bis 20 Mol Ethylenoxid an ein Mol Fettalkohol, Alkylcyclohexanol, Alkylphenol, Fettsäure, Fettamin, Fettsäureamid oder Alkansulfonamid. Von besonderem Interesse sind Anlagerungsprodukte von 5 bis 16 Mol Ethylenoxid an Kokos- oder Talgfettalkohole, an Oleylalkohol, ein Gemisch aus Oleylalkohol und Cetylalkohol sowie an Mono-, Di- oder Trialkylphenole und an Monoalkylcyclohexanole mit 6 bis 14 Kohlenstoffatomen in den Alkylresten. Auch gemischte Anlagerungsprodukte von Ethylenoxid und Propylenoxid an die genannten Verbindungen mit einem aktiven Wasserstoffatom kommen in Betracht. Die genannten Alkoxylierungsprodukte können auch endgruppenverschlossen sein, beispielsweise durch Ether- oder Acetalgruppen.

In den erfindungsgemäßen Gemischen können ferner Gerüstsubstanzen vorhanden sein; als solche eignen sich beispielsweise Alkalisalze der Glukonsäure, insbesondere Natriumglukonat, die Alkalisalze der

Nitrilotriessigsäure, Ethylendiamintetraessigsäure, Hydroxyethandiphosphonsäure, Phosphonobutantricarbonsäure, Milchsäure, Citronensäure oder Weinsäure. Weiterhin kommen als Gerüstsubstanzen die wasserlöslichen Salze höhermolekularer Polycarbonsäuren in Betracht, etwa Polymerisate der Maleinsäure, Itakonsäure, Fumarsäure und Zitraconsäure. Auch Mischpolymerisate dieser Säuren untereinander oder mit anderen polymerisierbaren Monomeren, wie z.B. Ethylen, Propylen, Acrylsäure, Vinylacetat, Isobutylen, Acrylamid und Styrol sind brauchbar.

In die erfindungsgemäßen Gemische können auch Reinigungsverstärker wie Fettsäuremono- und -diethanolamide, beispielsweise Kokosfettsäuremonoethanolamid und Kokosfettsäurediethanolamid, und Anlagerungsprodukte von bis zu 4 Mol Ethylenoxid oder Propylenoxid an Alkylamine mit 12 bis 18 Kohlenstoffatomen oder Fettalkohole mit 8 bis 12 Kohlenstoffatomen und freie Fettalkohole mit 8 bis 12 Kohlenstoffatomen sowie Reinigungsverstärker auf Cellulosebasis eingearbeitet werden.

Darüberhinaus kann es für weitere Anwendungsbereiche vorteilhaft sein, wenn die erfindungsgemäßen Gemische zusätzlich zu der erfindungsgemäßen Kombination aus quartären Ammoniumverbindungen und Jodpropinyloxy-ethanol-carbamatverbindungen weitere antimikrobiell wirksame Substanzen enthalten.

Für die Herstellung gebrauchsfertiger Reinigungslösungen mit desinfizierender Wirkung können neben flüssigen Konzentraten auch feste Produkte, vorzugsweise in Pulver- oder Granulatform bereitgestellt werden, die die erfindungsgemäßen antimikrobiell wirksamen Gemische enthalten.

Die erfindungsgemäßen antimikrobiell synergistisch wirksamen Gemische können als Desinfektions- und Konservierungsmittel auf vielen Gebieten zum Einsatz gelangen, beispielsweise bei der Flächendesinfektion in Krankenhäusern, Schulen, Badeanstalten, öffentlichen Verkehrsmitteln, gewerblichen Betrieben und Industrieanlagen. Besondere Bedeutung kommt den erfindungsgemäßen Gemischen auf dem Gebiet der Desinfektion in landwirtschaftlichen Betrieben, in Molkereien und Brauereien und anderen Betrieben der Nahrungsmittel-und Getränkeindustrie zu. Ferner können die synergistischen Gemische zum Konservieren von Pflanzenvermehrungsmaterial, insbesondere von Samen und Blumenzwiebeln eingesetzt werden. Weiterhin können die erfindungsgemäßen Gemische bei der Konservierung technischer Produkte wie Farbstoffdispersionen, Klebstoffen, Bohr- und Schneidölen oder Produkten der papier-, pappe- oder lederverarbeitenden Industrie sowie zur Konservierung von Industrie- und Brauchwasser Anwendung finden. Schließlich können die erfindungsgemäßen Gemische auch zum Materialschutz eingesetzt werden, beispielsweise zum Imprägnieren von Holz. Hier können u.a. Kisten, wie sie in der gewerblichen Pilzzucht verwendet werden, wirkungsvoll gegen den Befall durch das Kulturmyzel ausgerüstet werden.

## Beispiele

### Beispiel 1

Als antimikrobiell wirksame quartäre Ammoniumverbindungen wurde Dodecyl-dimethyl-ammoniumchlorid (Produkt A) eingesetzt. Als antimikrobiell wirksame Jodpropinyloxy-ethanol-carbamate kamen folgende Verbindungen der Formel (III)

$I\text{-}C{\equiv}C\text{-}CH_2\text{-}O\text{-}CH_2CH_2\text{-}O\text{-}CONH\text{-}R$ (III)

zum Einsatz:
Produkt B: R = $CH_3CH_2$-
Produkt C: R = $CH_3(CH_2)_2$-
Produkt D: R = $(CH_3)_3C$-
Produkt E: R = $C_6H_5$-
Produkt F R = p-Cl-$C_6H_4$-
Produkt G: R = p-$CH_3$-$C_6H_4$-$SO_2$-

Produkt A wurde mit den Produkten B bis G zu folgenden erfindungsgemäßen Gemischen kombiniert (GT = Gewichtsteile):

Gemisch AB 1

4,5 GT Produkt A
1 GT Produkt B

Gemisch AB 2

1 GT Produkt A
1 GT Produkt B

Gemisch AC 1

4,5 GT Produkt A
1 GT Produkt C

Gemisch AC 2

1 GT Produkt A
1 GT Produkt C

Gemisch AD 1

4,5 GT Produkt A
1 GT Produkt D

Gemisch AD 2

1 GT Produkt A
1 GT Produkt D

Gemisch AE 1

4,5 GT Produkt A
1 GT Produkt E

Gemisch AE 2

1 GT Produkt A
1 GT Produkt E

Gemisch AF 1

4,5 GT Produkt A
1 GT Produkt F

Gemisch AF 2

1 GT Produkt A
1 GT Produkt F

Gemisch AG 1

4,5 GT Produkt A
1 GT Produkt G

Gemisch AG 2

1 GT Produkt A
1 GT Produkt G

Die mikrobistatische Wirksamkeit der erfindungsgemäßen Gemische AB 1 bis AG 2 im Vergleich zu den Einzelkomponenten (Produkte A bis G) wurde gegenüber folgenden Testkeimsuspensionen bestimmt:

1. Candida albicans $1x10^8$ Keime/ml
2. Penicillium camerunense $5x10^7$ Keime/ml
3. Penicillium funiculosum $3x10^7$ Keime/ml
4. Trichoderma viride $6x10^7$ Keime/ml

5. Aspergillus niger 4x10[7] Keime/ml

Die Hemmkonzentrationen der zu untersuchenden Produkte wurden nach den Richtlinien für die Prüfung und Bewertung chemischer Desinfektionsverfahren, Kapitel 2.1, abgedruckt in Zbl. Bakt. Hyg., I. Abt. Orig. B 172, 536-537 (1981) ermittelt. Die Substanzgemische AB 1 bis AG 2 und die Einzelkomponenten A bis G wurden zu wässrigen Stammlösungen gelöst, aus denen durch Zusatz von Würzebouillon die entsprechenden Verdünnungsreihen hergestellt wurden.

Die gefundenen Ergebnisse sind in der nachstehenden Tabelle I wiedergegeben.

TABELLE I

Hemmkonzentrationen der Gemische AB 1 bis AG 2 in ppm im Vergleich zu den Einzelkomponenten A bis G

| Produkt | Testkeim | | | | |
|---|---|---|---|---|---|
| | 1 | 2 | 3 | 4 | 5 |
| A* | 70 | 20 | 7 | 15 | 70 |
| B* | 70 | 7 | 10 | 15 | 4,5 |
| AB1 | 24,5 | 3,7 | 3,7 | 5,5 | 8,5 |
| AB2 | 20 | 6 | 4 | 6 | 6 |
| C* | 45 | 7 | 10 | 15 | 3 |
| AC1 | 24,5 | 3,7 | 3,7 | 3,7 | 8,5 |
| AC2 | 20 | 6 | 4 | 4 | 4 |
| D* | 100 | 7 | 10 | 15 | 7 |
| AD1 | 24,5 | 3,7 | 2,5 | 5,5 | 5,5 |
| AD2 | 30 | 6 | 6 | 9 | 4 |
| E* | 20 | 7 | 7 | 10 | 10 |
| AE1 | 12 | 3,7 | 2,5 | 3,7 | 5,5 |
| AE2 | 14 | 6 | 4 | 6 | 4 |
| F* | 45 | 15 | 20 | 20 | 7 |
| AF1 | 12 | 3,7 | 3,7 | 3,7 | 8,5 |
| AF2 | 20 | 14 | 4 | 9 | 4 |
| G* | 100 | 20 | 30 | 20 | 20 |
| AG1 | 24,5 | 5,5 | 3,7 | 8,5 | 12 |
| AG2 | 30 | 14 | 6 | 14 | 14 |

* Vergleichssubstanz

In der Tabelle wurden für die Hemmkonzentrationen der erfindungsgemäßen Gemische AB 1 bis AG 2 jeweils die Summen aus den vorhandenen Mengen der Einzelkomponenten aufgenommen, die in den oben angegebenen Gewichtsverhältnissen eingesetzt wurden.

Beim Einsatz der erfindungsgemäßen Gemische AB 1 bis AG 2 konnten praktisch durchweg synergistische Effekte beobachtet werden.

Beispiel 2

Als antimikrobiell wirksame quartäre Ammoniumverbindung wurde Benzyl-dimethyl-n-dodecyl/n-tetradecyl-ammoniumchlorid (70 Mol-% $C_{12}$; 30 Mol-% $C_{14}$: Produkt H) eingesetzt. Als antimikrobiell wirksame Jodpropinyloxy-ethanol-carbamatverbindungen kamen die Produkte B, C, D, F und G zum Einsatz.

Produkt H wurde mit den Produkten B, C, D, F und G zu folgenden erfindungsgemäßen Gemischen kombiniert:

Gemisch HB 1

4,5 GT Produkt H
1 GT Produkt B

Gemisch HB 2

| | |
|---|---|
| 1 GT | Produkt H |
| 1 GT | Produkt B |

Gemisch HC 1

| | |
|---|---|
| 4,5 GT | Produkt H |
| 1 GT | Produkt C |

Gemisch HC 2

| | |
|---|---|
| 1 GT | Produkt H |
| 1 GT | Produkt C |

Gemisch HD 1

| | |
|---|---|
| 4,5 GT | Produkt H |
| 1 GT | Produkt D |

Gemisch HD 2

| | |
|---|---|
| 1 GT | Produkt H |
| 1 GT | Produkt D |

Gemisch HF 1

| | |
|---|---|
| 4,5 GT | Produkt H |
| 1 GT | Produkt F |

Gemisch HF 2

| | |
|---|---|
| 1 GT | Produkt H |
| 1 GT | Produkt F |

Gemisch HG 1

| | |
|---|---|
| 4,5 GT | Produkt H |
| 1 GT | Produkt G |

Gemisch HG 2

| | |
|---|---|
| 1 GT | Produkt H |
| 1 GT | Produkt G |

Die mikrobistatische Wirksamkeit der erfindungsgemäßen Gemische (Produkte HB 1 bis HG 2) im Vergleich zu den Einzelkomponenten (Produkte B, C, D, F, G und H) wurde gegenüber den im Beispiel 1 beschriebenen Testkeimsuspensionen bestimmt. Die Hemmkonzentrationen wurden analog Beispiel 1 ermittelt. Die gefundenen Ergebnisse sind in der Tabelle II zusammengefaßt.

TABELLE I

| Hemmkonzentrationen der Gemische HB 1 bis HG 2 in ppm im Vergleich zu den Einzelkomponenten B, C, D, F, G und H | | | | | |
|---|---|---|---|---|---|
| Produkt | Testkeim | | | | |
| | 1 | 2 | 3 | 4 | 5 |
| H* | 70 | 45 | 4,5 | 15 | 70 |
| B* | 70 | 7 | 10 | 15 | 4,5 |
| HB1 | 37 | 1,2 | 3,7 | 8,5 | 12 |
| HB2 | 20 | 9 | 4 | 4 | 4 |
| C* | 45 | 7 | 10 | 15 | 3 |
| HC1 | 37 | 5,5 | 3,7 | 5,5 | 8,5 |
| HC2 | 20 | 9 | 4 | 4 | 4 |
| D* | 100 | 7 | 10 | 15 | 7 |
| HD1 | 24,5 | 3,7 | 3,7 | 3,7 | 5,5 |
| HD2 | 30 | 6 | 3 | 4 | 4 |
| F* | 45 | 15 | 20 | 20 | 7 |
| HF1 | 37 | 5,5 | 3,7 | 8,5 | 12 |
| HF2 | 30 | 9 | 6 | 14 | 4 |
| G* | 100 | 20 | 30 | 20 | 20 |
| HG1 | 55 | 3,7 | 5,5 | 8,5 | 8,5 |
| HG2 | 30 | 14 | 6 | 9 | 14 |

* Vergleichssubstanz

Beim Einsatz der erfindungsgemäßen Gemische HB1 bis HG2 gegen die Testkeime 1 bis 5 konnten praktisch durchweg synergistische Effekte beobachtet werden.

## Patentansprüche

**1.** Antimikrobiell wirksame Gemische enthaltend
a) mindestens eine antimikrobiell wirksame quartäre Ammoniumverbindung und
b) mindestens eine antimikrobiell wirksame Jodpropinyloxy-ethanol-carbamatverbindung,
wobei die Komponenten a und b im Gewichtsverhältnis von a : b im Bereich von 0,3 : 1 bis 9 : 1 vorliegen.

**2.** Antimikrobiell wirksame Gemische nach Anspruch 1, dadurch gekennzeichnet, daß die Komponenten a und b im Gewichtsverhältnis von a : b im Bereich von 1 : 1 bis 6 : 1 vorliegen.

**3.** Antimikrobiell wirksame Gemische nach Anspruch 1 oder 2, dadurch gekennzeichnet, daß sie als antimikrobiell wirksame quartäre Ammoniumverbindungen Substanzen enthalten, die der Formel I

$$[R^1R^2N^+(CH_3)_2]X^{\ominus} \quad (I)$$

entsprechen, in der $R^1$ und $R^2$ gleich oder verschieden sein können und einen vorzugsweise geradkettigen Alkylrest mit 8 bis 18 Kohlenstoffatomen oder einen Benzylrest und $X^{\ominus}$ ein Halogenidanion, vorzugsweise ein Chloridanion darstellen, wobei nur einer der Reste $R^1$ oder $R^2$ ein Benzylrest sein kann.

**4.** Antimikrobiell wirksame Gemische nach den Ansprüchen 1 bis 3, dadurch gekennzeichnet, daß sie als antimikrobiell wirksame quartäre Ammoniumverbindungen Benzyl-dimethyl-n-dodecylammoniumchlorid, Benzyl-dimethyl-n-tetradecylammoniumchlorid oder Gemische dieser Verbindungen enthalten.

**5.** Antimikrobiell wirksame Gemische nach den Ansprüchen 1 bis 4, dadurch gekennzeichnet, daß sie als antimikrobiell wirksame Jodpropinyloxy-ethanol-carbamatverbindungen Substanzen enthalten, die der Formel (II)

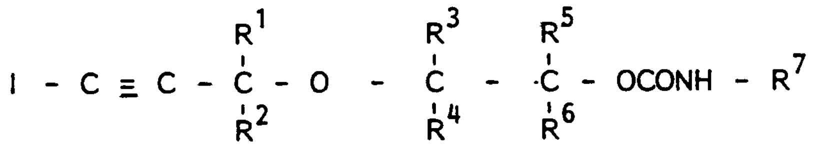 (II)

entsprechen,
in der $R^1$ und $R^2$ gleich oder verschieden sind und Wasserstoff, lineare oder verzweigte Alkyl- oder Alkenylreste mit 1 bis 6 Kohlenstoffatomen oder cyclische Alkylreste mit 5 bis 7 Kohlenstoffatomen oder $R^1$ und $R^2$ zusammengenommen $-(CH_2)_n$ bedeuten, wobei n 4 bis 6 ist, $R^3$, $R^4$, $R^5$ und $R^6$, die gleich oder verschieden sein können, Wasserstoff, Alkylreste mit 1 bis 4 Kohlenstoffatomen, Arylreste oder $CCl_3$ bedeuten oder $R^3$ und $R^5$ oder $R^4$ und $R^6$ zusammengenommen $-(CH_2)_n$bedeuten, wobei n 3 bis 5 ist, und $R^7$ Wasserstoff, lineare oder verzweigte Alkylreste mit 1 bis 12 Kohlenstoffatomen oder cyclische Alkylreste mit 4 bis 8 Kohlenstoffatomen, Arylreste, substituierte Arylreste, Aralkylreste oder Arylsulfonylreste bedeutet.

**6.** Antimikrobiell wirksame Gemische nach den Ansprüchen 1 bis 5, dadurch gekennzeichnet, daß sie als wasserhaltige Konzentrate mit einer Gesamtkonzentration der Komponenten a und b zwischen 3 und 50 Gew.-%, bezogen auf das gesamte Konzentrat, vorliegen.

**7.** Antimikrobiell wirksame Gemische nach den Ansprüchen 1 bis 6, dadurch gekennzeichnet, daß sie als wasserhaltige gebrauchsfertige antimikrobielle Mittel mit einer Gesamtkonzentration der Komponenten a und b zwischen 0,005 und 5 Gew.-%, bezogen auf das gesamte Mittel, vorliegen.

**8.** Verwendung der antimikrobiell wirksamen Gemische nach den Ansprüchen 1 bis 7 in der Stalldesinfektion.

**9.** Verwendung der antimikrobiell wirksamen Gemische nach den Ansprüchen 1 bis 7 in der Desinfektion von Melkanlagen.

**10.** Verwendung der antimikrobiell wirksamen Gemische nach den Ansprüchen 1 bis 7 zum Konservieren von Pflanzenvermehrungsmaterial.

**11.** Verwendung der antimikrobiell wirksamen Gemische nach den Ansprüchen 1 bis 7 zum Materialschutz, insbesondere zum Holzschutz.

**Claims**

**1.** Antimicrobial mixtures containing
a) at least one antimicrobial quaternary ammonium compound and
b) at least one antimicrobial iodopropynyloxy ethanol carbamate compound,
components a and b being present in a ratio by weight of a to b of 0.3:1 to 9:1.

**2.** Antimicrobial mixtures as claimed in claim 1, characterized in that components a and b are present in a ratio by weight of a to b of 1:1 to 6:1.

**3.** Antimicrobial mixtures as claimed in claim 1 or 2, characterized in that they contain compounds corresponding to the following formula

$[R^1R^2N^{\oplus}(CH_3)_2]X$ (I)

in which
$R^1$ and $R^2$ may be the same or different and represent a preferably linear $C_8$-$C_{18}$ alkyl radical or a benzyl radical and X is a halide anion, preferably a chloride anion; only one of the substituents $R^1$ and $R^2$ may be a benzyl radical, as the antimicrobial quaternary ammonium compounds.

**4.** Antimicrobial mixtures as claimed in claims 1 to 3, characterized in that they contain benzyldimethyl-n-dodecyl ammonium chloride, benzyldimethyl-n-tetradecyl ammonium chloride or mixtures of these

compounds as the antimicrobial quaternary ammonium compounds.

**5.** Antimicrobial mixtures as claimed in claims 1 to 4, characterized in that they contain compounds corresponding to the following formula

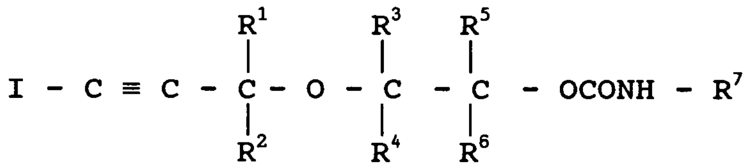
(II)

in which
$R^1$ and $R^2$ may be the same or different and represent hydrogen, linear or branched $C_1$-$C_6$ alkyl or alkenyl radicals or cyclic $C_5$-$C_7$ alkyl radicals or $R^1$ and $R^2$ together represent $-(CH_2)_n$ with n = 4 to 6,
$R^3$, $R^4$, $R^5$ and $R^6$ may be the same or different and represent hydrogen, $C_1$-$C_4$ alkyl radicals, aryl radicals or $CCl_3$ or $R^3$ and $R^5$ or $R^4$ and $R^6$ together represent $-(CH_2)_n$ with n = 3 to 5 and
$R^7$ represents hydrogen, linear or branched $C_1$-$C_{12}$ alkyl radicals or cyclic $C_4$-$C_8$ alkyl radicals, aryl radicals, substituted aryl radicals, aralkyl radicals or arylsulfonyl radicals,
as the antimicrobial iodopropynyloxy ethanol carbamate compounds.

**6.** Antimicrobial mixtures as claimed in claims 1 to 5, characterized in that they are present in the form, of aqueous concentrates in which the total concentration of components a and b is from 3 to 50% by weight, based on the concentrate as a whole.

**7.** Antimicrobial mixtures as claimed in claims 1 to 6, characterized in that they are present in the form of aqueous ready-to-use antimicrobial preparations in which the total concentration of components a and b is from 0.005 to 5% by weight, based on the preparation as a whole.

**8.** The use of the antimicrobial mixtures claimed in claims 1 to 7 in the disinfection of animal stalls.

**9.** The use of antimicrobial mixtures claimed in claims 1 to 7 in the disinfection of milking plants.

**10.** The use of the antimicrobial mixtures claimed in claims 1 to 7 for the preservation of plant propagation material.

**11.** The use of the antimicrobial mixtures claimed in claims 1 to 7 for the protection of materials, more especially the protection of wood.

## Revendications

**1.** Mélanges à effet microbicide contenant
a) au moins un composé d'ammonium quaternaire à action microbicide, et
b) au moins un composé d'iodopropinyloxy-éthanol-carbamate à action microbicide,

où les constituants a) et b) sont présents avec un rapport pondéral de a:b compris dans la gamme de 0,3:1 à 9:1.

**2.** Mélanges à effet microbicide selon la revendication 1, caractérisés en ce que les constituants A et B sont présents avec un rapport pondéral de a : b compris dans la gamme de 1 : 1 à 6 : 1.

**3.** Mélanges à effet microbicide selon la revendication 1 ou 2, caractérisés en ce qu'ils contiennent comme composés d'ammonium quaternaires à effet microbicide des substances selon la formule (I)

$$[R^1R^2N^+(CH_3)_2]X^\ominus$$

dans laquelle $R^1$ et $R^2$ peuvent être identiques ou différents et représentent un radical alkyle, de préférence à chaîne linéaire, avec 8 à 18 atomes de carbone, ou un radical benzyle et $X^{(-)}$ un anion

halogénure, et en particulier un anion chlorure dans lequel un seulement des radicaux $R^1$ ou $R^2$ peut être un radical benzyle.

4. Mélanges à effet microbicide selon les revendications 1 à 3, caractérisés en ce qu'ils contiennent comme composés d' ammonium quaternaires à effet microbicide du chlorure de benzyl-diméthyl-n-dodécylammonium, du chlorure de benzyl-diméthyl - n-tétradécylammonium ou des mélanges de ces composés.

5. Mélanges à effet microbicide selon les revendications 1 à 4, caractérisés en ce qu'ils contiennent comme composés d' iodopropinyloxy-éthanol-carbamate à effet microbicide des substances de la formule (II)

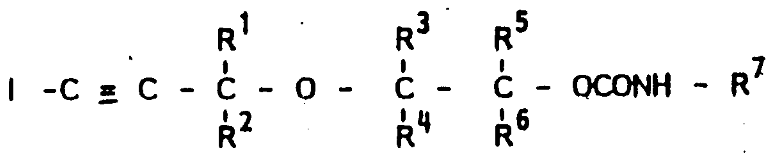

(II)

dans laquelle $R^1$ et $R^2$ sont identiques ou différents et représentent de l'hydrogène, des radicaux alkyle ou alkényle linéaires ou ramifiés avec 1 à 6 atomes de carbone ou des radicaux alkyle cycliques avec 5 à 7 atomes de carbone, ou bien $R^1$ et $R^2$ représentent ensemble $-(CH_2)_n$, où n est un nombre de 4 à 6, $R^3$, $R^4$, $R^5$ et $R^6$ peuvent être identiques ou différents, représentent de l'hydrogène, des radicaux alkyle à 1 à 4 atomes de carbone, des radicaux aryle ou $CCl_3$, ou bien $R^3$ et $R^5$ ou $R^4$ et $R^6$ représentent ensemble $-(CH_2)_n$, où n est un nombre de 3 à 5 et $R^7$ représente de l'hydrogène, des radicaux alkyle linéaires ou ramifiés avec 1 à 12 atomes de carbone ou des radicaux alkyle cycliques avec 4 à 8 atomes de carbone, des radicaux aryle, des radicaux aryle substitués, des radicaux aralkyle ou des radicaux arylsulfonyle.

6. Mélanges à effet microbicide selon les revendications 1 à 5, caractérisés en ce qu'ils sont présents sous forme de concentrés aqueux avec une concentration totale des constituants A et B comprise entre 3 et 50 % en poids, rapporté à la concentration totale.

7. Mélanges à effet microbicide selon les revendications 1 à 6, caractérisés en ce qu'ils se présentent sous forme d'agents microbicides aqueux prêts à l'emploi, avec une concentration totale des constituants A et B comprise entre 0,005 et 5% en poids rapporté à l'ensemble du produit.

8. Utilisation des mélanges à effet microbicide selon les revendications 1 à 7, pour la désinfection des étables.

9. Utilisation des mélanges à effet microbicide selon les revendications 1 à 7, pour la désinfection des laiteries.

10. Utilisation des mélanges à effet microbicide selon les revendications 1 à 7, pour la conservation des produits de multiplication des plantes.

11. Utilisation des mélanges à effet microbicide selon les revendications 1 à 7, pour la protection des matériaux et en particulier pour la protection du bois.